# EUROPEAN PATENT APPLICATION

(11) **EP 4 262 010 A1**
(43) Date of publication of application: **18.10.2023**
(21) Application number: 23167088.6
(22) Date of filing: 06.04.2023
(51) Int. Cl.: H01M 50/593, H01M 10/0568, H01M 10/0569, H01M 10/0587, H01M 50/107, H01M 50/152, H01M 50/30, H01M 50/474, H01M 50/477, H01M 50/483, H01M 50/486, H01M 50/491

(54) **SECONDARY BATTERY**

(30) Priority: 07.04.2022 KR 20220043357
(71) Applicant: Samsung SDI Co., Ltd., Yongin-si, Gyeonggi-do 17084 (KR)
(72) Inventor: KIM, Dae Kyu, 17084 Yongin-si (KR)
(74) Representative: Marks & Clerk LLP

(57) **Abstract**

A secondary battery includes: a cylindrical can; an electrode assembly in the cylindrical can with an electrolyte, the electrode assembly including a cathode and an anode; a cap assembly coupled to a top of the cylindrical can; and a plate-shaped upper insulating plate between the electrode assembly and the cap assembly. The upper insulating plate includes: a main layer having a plurality of pores extending between an upper surface and a lower surface thereof; and an auxiliary layer adhered to at least one surface of the main layer and partially melted by the electrolyte.

## Description

### BACKGROUND

### 1. Field

Aspects of embodiments of the present disclosure relate to a secondary battery.

### 2. Description of the Related Art

A secondary battery is a power storage device that provides excellent energy density and is designed to convert electrical energy into chemical energy and stores the same. Compared to non-rechargeable (or primary) batteries, secondary batteries are designed to be recharged and are widely used in electronic devices, such as smart phones, cellular phones, notebooks, and tablet PCs. Recently, interest in electric vehicles has increased to prevent environmental pollution, and accordingly, high-capacity secondary batteries are being adopted for electric vehicles. Such secondary batteries have characteristics such as high density, high power, and stability.

The above information disclosed in this Background section is for enhancement of understanding of the background of the present disclosure, and therefore, it may contain information that does not constitute prior art.

### SUMMARY

Embodiments of the present disclosure provide a secondary battery in which an upper insulating layer has a plurality of pores formed by an electrolyte, and thus, gas generated in the electrode assembly can be easily discharged when an internal pressure rises.

In addition, embodiments of the present disclosure provide a secondary battery in which an upper insulating plate includes a plurality of layers, including a film-type auxiliary layer bonded to a main layer having a plurality of pores. Thus, a short circuit and a reduction in lifespan, that may occur when conductive impurities which may be generated during a secondary battery assembly process, are introduced into the main layer having a plurality of pores or introduced into a cylindrical can, may be prevented.

According to an embodiment of the present disclosure includes a secondary battery including: a cylindrical can; an electrode assembly in the cylindrical can with an electrolyte, the electrode assembly including a cathode and an anode; a cap assembly coupled to a top of the cylindrical can; and a plate-shaped upper insulating plate between the electrode assembly and the cap assembly. The upper insulating plate includes: a main layer having a plurality of pores extending between an upper surface and a lower surface thereof; and an auxiliary layer adhered to at least one surface of the main layer and partially melted by the electrolyte.

The main layer may be a mesh-type film having regular pores extending between the upper and lower surfaces.

The main layer may be any one selected from fiber glass, stainless steel, poly-high mesh, monofilament, or stainless black.

The main layer may have a mesh count in a range of 16x18 to 32x32 and a pore size of at least 700 µm.

The auxiliary layer may be a film made of any one selected from nylon, polystyrene (PS), and oriented polystyrene (OPS).

The main layer may be any one of nonwoven fabric, nylon fabric, or PTFE film having irregular pores extending between the upper and lower surfaces.

The auxiliary layer may be a film made of any one selected from nylon, polystyrene (PS), and oriented polystyrene (OPS).

The auxiliary layer may be bonded to at least one of the upper and lower surfaces of the main layer by an acrylic adhesive.

The electrolyte may include LiPF₆ dissolved in a solvent having EC, EMC, DEC, PC, and DMC mixed in equal volume ratios.

The auxiliary layer may have a thickness in a range of 5 µm to 25 µm.

The main layer may be polystyrene (PS) or oriented polystyrene (OPS) partially melted by the electrolyte.

At least some of the above and other features of the invention are set out in the claims.

### BRIEF DESCRIPTION OF DRAWINGS

FIGS. 1A, 1B, and 1C are a perspective view, a cross-sectional view, and an exploded perspective view of a secondary battery according to an embodiment of the present disclosure.
FIGS. 2A, 2B, and 2C are enlarged cross-sectional and plan views showing examples of an upper insulating plate in the secondary battery shown in FIGS. 1A to 1C.
FIG. 3 is a cross-sectional view showing another example of an upper insulating plate in the secondary battery shown in FIG. 1C.
FIG. 4 shows an experimental result in which an auxiliary layer has pores formed by an electrolyte in the upper insulating plate shown in FIG. 2A.

### DETAILED DESCRIPTION

Hereinafter, embodiments of the present disclosure will be described, in detail, with reference to the accompanying drawings.

Examples of the present disclosure are provided to more completely explain the present disclosure to those skilled in the art, and the following examples may be modified in various other forms. Thus, the present disclosure may be embodied in many different forms and should not be construed as being limited to the embodiments set forth herein. Rather, these embodiments are provided so that this disclosure will be thorough and complete and will convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

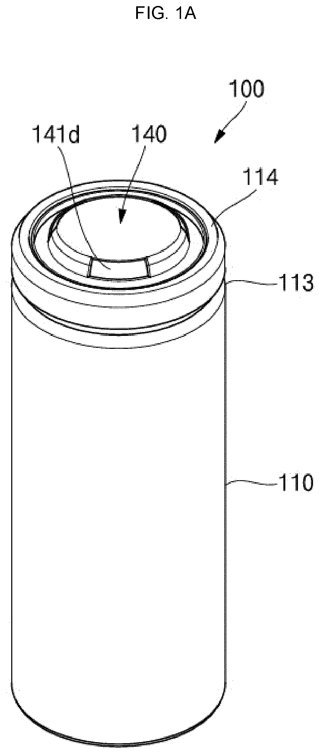

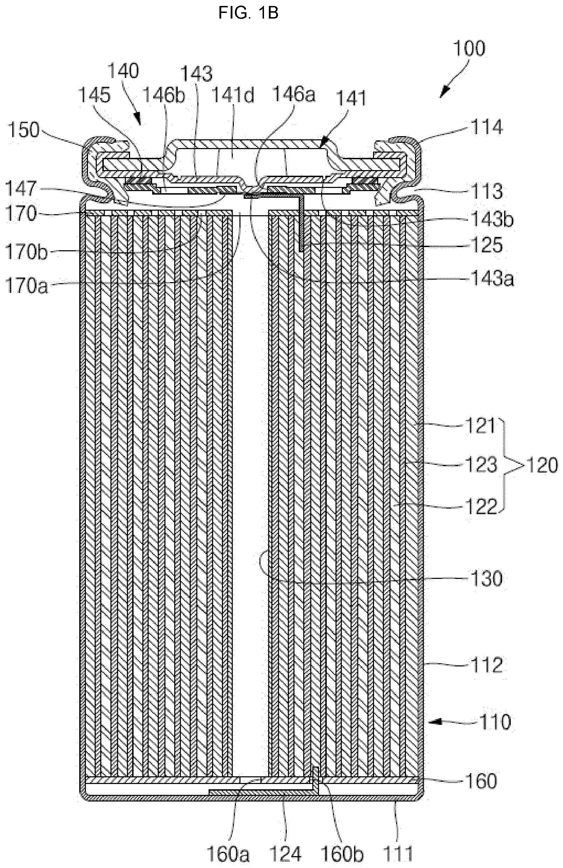

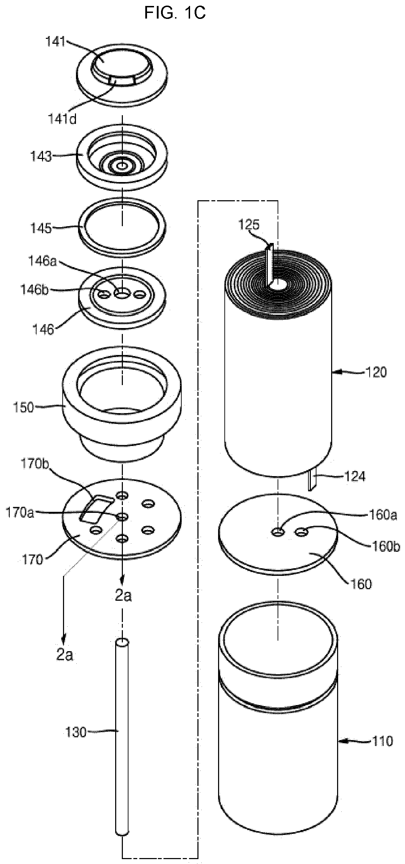

Referring to FIGS. 1A, 1B, and 1C, a perspective view, a cross-sectional view, and an exploded perspective view of a secondary battery according to an embodiment of the present disclosure are shown.

As shown in FIGS. 1A, 1B, and 1C, the secondary battery 100 according to an embodiment of the present disclosure includes a cylindrical can 110, an electrode assembly 120, a cap assembly 140, a lower insulating plate 160, and an upper insulating plate 170. In addition, the secondary battery 100 may further include a center pin 130 coupled to the electrode assembly 120.

The cylindrical can 110 has a circular bottom portion 111 and a side portion 112 extending a length upwardly from the bottom portion 111. During the manufacturing process of the secondary battery 100, the top of the cylindrical can 110 is open. Therefore, during the secondary battery assembly process, the electrode assembly 120 may be inserted into the cylindrical can 110 together with an electrolyte. The cylindrical can 110 may be made of steel, a steel alloy, aluminium, an aluminium alloy, or an equivalent thereof, but the material of the cylindrical can 110 is not limited thereto. To arrange the cap assembly 140 over the electrode assembly 120 and to prevent the cap assembly 140 from escaping to the outside, the cylindrical can 110 may have a beading part (e.g., bead) 113 formed to be inwardly recessed below the cap assembly 140 and a crimping part (e.g., a crimped end) 114 formed to be inwardly bent above the cap assembly 140.

The electrode assembly 120 is accommodated inside the cylindrical can 110. The electrode assembly 120 includes an anode plate 121 coated with an anode active material (e.g., graphite, carbon, etc.), a cathode plate 122 coated with a cathode active material (e.g., a transition metal oxide (LiCoO₂, LiNiO₂, LiMn₂O₄, etc.)), and a separator 123 positioned between the anode plate 121 and the cathode plate 122 to prevent a short circuit therebetween while allowing only the movement of lithium ions. The anode plate 121, the cathode plate 122, and the separator 123 are wound in a substantially cylindrical shape. In some embodiments, the anode plate 121 may be copper (Cu) or nickel (Ni) foil, the cathode plate 122 may be aluminium (Al) foil, and the separator 123 may be polyethylene (PE) or polypropylene (PP), but the present disclosure is not limited to the materials listed above. In addition, the anode plate 121 may include at least one anode tab 124 protruding and extending downwardly by a length, and the cathode plate 122 may include at least one cathode tab 125 protruding upwardly by a length. In some embodiments, the anode tab 124 and the cathode tab 125 may be formed of separate metal plates and may be welded to the anode plate 121 and the cathode plate 122, respectively. In other embodiments, the anode tab 124 may protrude and extend upwardly from the electrode assembly 120, and the cathode tab 125 may protrude and extend downwardly from the electrode assembly 120. In addition, the anode tab 124 may be made of copper or nickel, and the cathode tab 125 may be made of aluminium, but the present disclosure is not limited to these materials.

The anode tab 124 of the electrode assembly 120 may be welded to the bottom portion 111 of the cylindrical can 110. Therefore, the cylindrical can 110 can act as an anode. In other embodiments, the cathode tab 125 may be welded to the bottom portion 111 of the cylindrical can 110, and in such an embodiment, the cylindrical can 110 may act as a cathode.

The center pin 130 has a hollow circular pipe shape and may be coupled to an approximate center of the electrode assembly 120. The center pin 130 may be made of steel, a steel alloy, aluminium, an aluminium alloy, or polybutylene terephthalate, but the center pin 130 is not limited to these materials. The center pin 130 suppresses deformation of the electrode assembly 120 during charging and discharging and acts as a passage for gas generated inside the secondary battery. In some embodiments, the center pin 130 may be omitted.

The cap assembly 140 includes a cap-up 141 having one or more through holes (or openings) 141d, a safety plate 143 installed under the cap-up 141, a connection ring 145 installed below the safety plate 143, a cap-down 146 coupled to the connection ring 145 and having first and second through holes (or openings) 146a and 146b, and a sub plate 147 that is fixed to a lower portion of the cap down 146 and electrically connected to the cathode tab 125. In some embodiments, the cap down 146 and the sub plate 147 may be integrally formed, and in such an embodiment, the cathode tab 125 may be fixed to the cap down 146.

The cap-up 141 has a top portion (e.g., a central portion) that is convexly formed and may be electrically connected to an external circuit. In addition, the cap-up 141 has a gas discharge hole (e.g., a gas discharge opening) 141d to provide a path through which gas generated inside the cylindrical can 110 may be discharged. The cap-up 141 is electrically connected to the electrode assembly 120 and transfers current generated by the electrode assembly 120 to an external circuit.

The safety plate 143 is a circular plate body corresponding to the cap-up 141. The safety plate 143 has a protrusion 143a protruding downwardly at the center of the safety plate 143. The safety plate 143 is electrically connected to the sub plate 147 fixed to the lower surface of the cap-down 146 via the protrusion 143a extending through the through hole 146a in the cap-down 146. The protrusion 143a of the safety plate 143 may be welded to the sub plate 147 by laser welding, ultrasonic welding, resistance welding, or an equivalent thereof. In addition, a notch 143b for guiding the rupture of the safety plate 143 is formed on the outer periphery of the protrusion 143a.

The safety plate 143 is configured to discharge internal gas while blocking current when an abnormal internal pressure is generated inside the cylindrical can 110. When the internal pressure of the cylindrical can 110 exceeds the operating pressure of the safety plate 143, the safety plate 143 rises (or inverts) due to the gas discharged through the gas discharge hole 146a in the cap-down 146 and is electrically separated from the sub plate 147. When this occurs, the sub plate 147 is electrically separated from the safety plate 143 because a welded portion of the protrusion 143a is torn (or disconnected). In addition, when the internal pressure of the cylindrical can 110 exceeds a rupture pressure, which is higher than the operating pressure of the safety plate 143, the notch 143b ruptures to prevent the secondary battery 100 from exploding.

The connection ring 145 is interposed between the safety plate 143 and the cap-down 146 to insulate the safety plate 143 from the cap-down 146. For example, the connection ring 145 is interposed between the outer periphery of the safety plate 143 and the outer periphery of the cap-down 146. The connection ring 145 may be made of a resin material, such as polyethylene (PE), polypropylene (PP), or polyethylene terephthalate (PET).

The cap-down 146 is a circular plate body. The through hole 146a is formed in the center of the cap-down 146, and the protrusion 143a of the safety plate 143 passes through the through hole 146a. In addition, the gas discharge hole 146b is formed at one side of the cap-down 146, and the sub plate 147 is coupled to the lower portion of the cap-down 146. The gas discharge hole 146b is configured to discharge internal gas when excessive internal pressure is generated inside the cylindrical can 110. The protrusion 143a of the safety plate 143 rises due to the gas discharged through the gas discharge hole 146b to separate the protrusion 143a from the sub plate 147. The sub plate 147 is welded between the protrusion 143a of the safety plate 143 passing through the through hole 146a in the cap-down 146 and the cathode tab 125. Accordingly, the sub plate 147 electrically connects the cathode tab 125 and the safety plate 143 to each other.

Generally, when a short circuit occurs in the secondary battery 100, the internal pressure increases such that internal gas discharges through the gas discharge hole 146b in the cap-down 146. Then, the protrusion 143a of the safety plate 143 rises due to the discharged gas and is electrically separated from the sub plate 147 to block current.

In addition, an insulating gasket 150 that insulates the cap assembly 140 from the side part 112 of the cylindrical can 110 is included. The insulating gasket 150 is installed in the upper opening of the cylindrical can 110. The insulation gasket 150 is shaped to be substantially compressed between the beading part 113 formed in the side part 112 of the cylindrical can 110 and the crimping part 114. For example, the insulating gasket 150 is assembled in close contact between the outer periphery of the cap-up 141 and the safety plate 143 and the upper opening of the cylindrical can 110. The cap-up 141, which is coupled to the safety plate 143, may be fixed to the upper end of the cylindrical can 110 by the crimping part 114 formed on the upper end of the cylindrical can 110 in a state in which the insulating gasket 150 is interposed therebetween.

The insulating gasket 150 may be made of a resin material, such as polyethylene (PE), polypropylene (PP), or polyethylene terephthalate (PET). The insulating gasket 150 may prevent the cap assembly 140 from being separated from the cylindrical can 110.

In addition, an electrolyte is injected into the cylindrical can 110, which enables movement of lithium ions generated by an electrochemical reaction in the anode plate 121 and the cathode plate 122 inside the battery during charging and discharging. The electrolyte may be a non-aqueous organic electrolyte that is a mixture of a lithium salt and a high-purity organic solvent. In addition, the electrolyte may be (or may include) LiPF₆ dissolved in a selected concentration in a solvent having ethylene carbonate (EC), ethyl methyl carbonate (EMC), diethyl carbonate (DEC), propylene carbonate (PC), and dimethyl carbonate (DMC) mixed in equal volume ratios. In some embodiments, the electrolyte may have LiPF₆ in a concentration of 1.0 M in a solvent having EC, EMC, DEC, PC, and DMC in a 2:2:2:2:2 volume ratio.

The lower insulating plate 160 is coupled to the cylindrical can 110 and has a first hole (or first opening) 160a in the center and a second hole (or second opening) 160b outside thereof. The lower insulating plate 160 may be interposed between the electrode assembly 120 and the bottom portion 111 of the cylindrical can 110. The lower insulating plate 160 prevents the electrode assembly 120 from electrically contacting the bottom portion 111 of the cylindrical can 110. For example, the lower insulating plate 160 prevents the cathode plate 122 of the electrode assembly 120 from electrically contacting the bottom portion 111. The first hole 160a allows the gas to quickly move upwardly through the center pin 130 when a large amount of gas is generated due to an abnormality in the secondary battery 100, and the second hole 160b allows the anode tab 124 to pass therethrough to be welded to the bottom portion 111. In the lower insulating plate 160 according to some embodiments, the first hole 160a and the second hole 160b may be one hole.

The upper insulating plate 170 is coupled to the cylindrical can 110 and has a first hole (or first opening) 170a in the center and a second hole (or second opening) 170b outside thereof. The upper insulating plate 170 may be interposed between the electrode assembly 120 and the cap assembly 140. The upper insulating plate 170 prevents the electrode assembly 120 from electrically contacting the cap assembly 140. For example, the upper insulating plate 170 prevents the anode plate 121 of the electrode assembly 120 from electrically contacting the cap assembly 140. The first hole 170a allows gas to quickly move to the cap assembly 140 when a large amount of gas is generated due to an abnormality in the secondary battery 100, and the second hole 170b allows the cathode tab 125 to extend therethrough to be welded to the cap assembly 140. In addition, during an electrolyte injection process, the first hole 170a and the second hole 170b allow the electrolyte to flow into the electrode assembly 120.

Although the second hole 170b is shown in FIG. 1C as a plurality of second holes 170b, in other embodiments, the second hole 170b may be only one hole through which the cathode tab 125 of the electrode assembly 120 passes. The upper insulating plate 170 may include a main layer 171 and an auxiliary layer 172 formed to cover at least one of the upper and lower surfaces of the main layer 171.

The configuration of the upper insulating plate 170 will be described in detail below.

When the secondary battery 100 includes the center pin 130, the diameters of the first holes 160a and 170a of the lower and upper insulating plates 160 and 170 are smaller than the diameter of the center pin 130, and thus, the center pin 130 is prevented from electrically contacting the bottom portion 111 of the cylindrical can 110 or the cap assembly 140 due to an external impact.

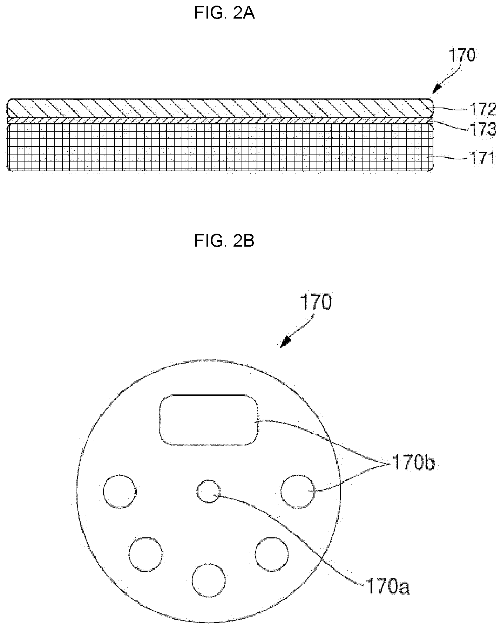

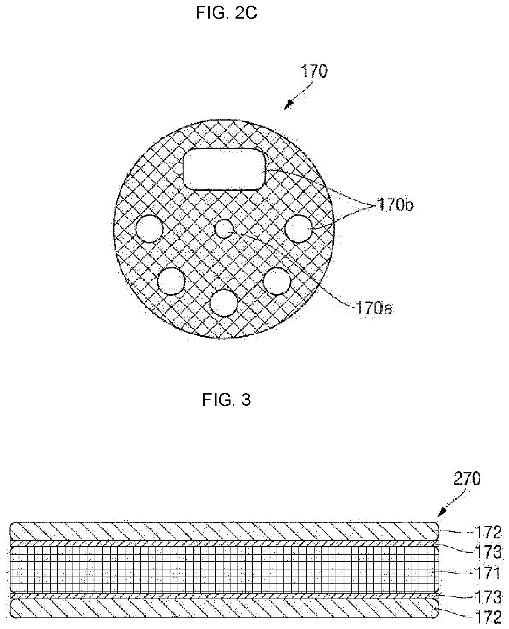

Referring to FIGS. 2A, 2B, and 2C, cross-sectional and plan views of the upper insulating plate 170 of the secondary battery 100 shown in FIGS. 1A to 1C are shown. FIG. 2A is a cross-sectional view taken along line 2a-2a of FIG. 1C. FIG. 2B is a schematic plan view of the upper insulating plate 170 before being impregnated with an electrolyte, and FIG. 2C is a schematic plan view of the upper insulating plate 170 after being impregnated with an electrolyte. Hereinafter, the configuration of the upper insulating plate 170 according to embodiments of the present disclosure will be described in detail with reference to FIGS. 2A to 2C.

The upper insulating plate 170 may include the main layer 171, that is a flat circular plate, and an auxiliary layer 172 covering one surface of the main layer 171. The auxiliary layer 172 may be adhered to and fixed to the main layer 171 by an adhesive 173.

As an example, the auxiliary layer 172 is shown as being bonded to the upper surface of the main layer 171, but the auxiliary layer 172 may be bonded to the lower surface of the main layer 171. As another example, as shown in FIG. 3, in the upper insulating plate 270, an auxiliary layer 172 may be attached to each of the upper and lower surfaces of the main layer 171 by using an adhesive 173, respectively. For example, in the upper insulating plate 170, the auxiliary layer 172 may be attached to at least one surface of the main layer 171 by using the adhesive 173.

The main layer 171 is a substantially flat plate and may have a first hole (or first opening) in the center and a plurality of second holes (or second openings) outside the first hole. The first and second holes in the main layer 171 may correspond in size and shape to the first and second holes 170a and 170b in the upper insulating plate 170, respectively.

In addition, the main layer 171 may have a plurality of pores penetrating (or extending) between the upper and lower surfaces thereof. For example, the main layer 171 may be a nonwoven fabric, nylon fabric, or PTFE film having irregular pores penetrating between the upper and lower surfaces, or a mesh-type film having regular pores penetrating between the upper and lower surfaces. As another example, the main layer 171 may be a polystyrene (PS) or oriented polystyrene (OPS) film in which irregular pores may be formed by partially melting when contacting an electrolyte.

For example, when the main layer 171 is a mesh film, the main layer 171 may be made of fiber glass, stainless steel, polyester, monofilament, stainless black, or an equivalent thereof. The main layer 171 may have a plurality of pores at regular intervals. For example, the main layer 171 may have a size selected from approximately 16x18mesh to approximately 32x32mesh, and when the pore size is 700 µm or more (e.g. from about 700 µm to about 1.5 mm), gas generated in the secondary battery 100 may be easily discharged therethrough.

Thus, when the main layer 171 is a mesh-type film, the size of pores may be adjustable. For example, when the main layer 171 is a mesh-type film, the main layer 171 may be selected to have pores suitable for the secondary battery 100.

The thickness of the main layer 171 may be approximately 100 µm to approximately 500 µm. When the thickness of the main layer 171 is less than about 100 µm, electrical insulation between the cap assembly 140 and the electrode assembly 120 may be unreliable, and when the thickness of the main layer 171 exceeds about 500 µm, the thickness is unnecessarily increased, which may cause a decrease in capacity compared to the size of the secondary battery 100 (e.g., a decrease in storage density).

When assembled in the secondary battery 100, the auxiliary layer 172 is adhered to the main layer 171 with the adhesive 173 and may cover the plurality of pores penetrating between the upper and lower surfaces of the main layer 171. The auxiliary layer 172 may be made of a nylon film. As another example, when the main layer 171 is a nonwoven fabric, nylon fabric, or PTFE film, or a mesh film, the auxiliary layer 172 may be made of polystyrene (PS) or oriented polystyrene (OPS). In addition, when the upper insulating plate 170 is constructed such that the auxiliary layer 172 is attached to the upper and lower surfaces of the upper insulating plate 170, respectively, the auxiliary layers 172 attached to the upper and lower surfaces of the upper insulating plate 170 may be the same as or different from each other.

In some embodiments, the auxiliary layer 172 may include first and second holes (or openings) corresponding in size and shape to the first and second holes 170a and 170b in the upper insulating plate 170, respectively. In addition, the auxiliary layer 172 may have first and second holes positioned and shaped to correspond to the first and second holes in the main layer 171. In some embodiments, the first hole 170a and the second hole 170b in the upper insulating plate 170 may be formed at once (or together) after the main layer 171 and the auxiliary layer 172 are bonded to each other. When the upper insulating plate 170 does not have the first hole 170a, each of the main layer 171 and the auxiliary layer 172 may include only a second hole.

When an electrolyte is injected into the auxiliary layer 172 in the secondary battery 100, part of the auxiliary layer 172 may be melted by the electrolyte to form a hole. The auxiliary layer 172 may be a tape integrally formed with the adhesive 173. The adhesive 173 may be an acrylic adhesive. The adhesive 173 may have a thickness of approximately 2 µm to approximately 5 µm. When the thickness of the adhesive 173 is less than about 2 µm, adhesion between the main layer 171 and the auxiliary layer 172 may be unreliable, and when the thickness of the adhesive 173 exceeds about 5 µm, the thickness may be unnecessarily increased and melting by electrolyte may be difficult or unreliable.

The thickness of the auxiliary layer 172 may be approximately 5 µm to approximately 25 µm. When the thickness of the auxiliary layer 172 is less than about 5 µm, it may be difficult to produce the auxiliary layer 172 having a uniform thickness. When the thickness of the auxiliary layer 172 exceeds about 25 µm, it may be difficult to form a hole penetrating between the upper and lower surfaces of the auxiliary layer 172 even if the auxiliary layer 172 is partially melted by an electrolyte.

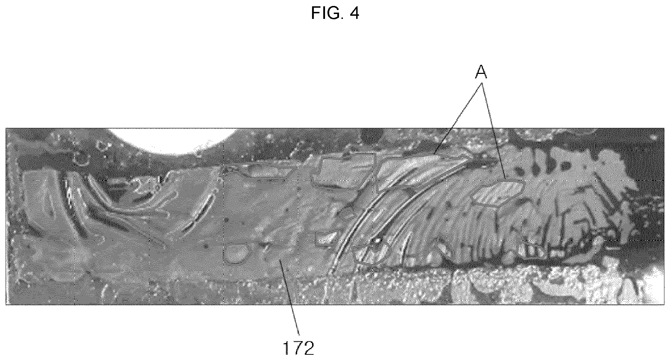

As an example, FIG. 4 is a photograph showing the result of an experimental example in which pores (A) are formed in the auxiliary layer 172 at 60 °C, 24 hours after the upper insulating plate 170 having a 10 µm thick auxiliary layer 172 is impregnated with an electrolyte. It can be seen that the auxiliary layer 172 is partially melted by the electrolyte, and a plurality of pores are formed therein. The adhesive 173 for bonding the auxiliary layer 172 and the main layer 171 to each other may also be partially melted by the electrolyte. The electrolyte, which is capable of partially dissolving the auxiliary layer 172 and the adhesive 173, is a mixed solvent of EC (ethylene carbonate), EMC (ethyl methyl carbonate), DEC (diethyl carbonate), PC (propylene carbonate), and DMC (dimethyl carbonate) (2: 2: 2: 2: 2 volume ratio) in which 1.0 M LiPF₆ was dissolved.

When the main layer 171 is made of nonwoven fabric or nylon fabric, the auxiliary layer 172 is bonded to cover burrs that may occur on the surface of the main layer 171, and thus, the burrs may be reduced, thereby improving the production process of the secondary battery 100. In addition, the auxiliary layer 172 in the form of a film or tape may facilitate handling of the main layer 171 having a plurality of pores and may improve insulation performance of the main layer 171.

In the upper insulating plate 170, the auxiliary layer 172 is adhered to the main layer 171 having a plurality of pores, thereby preventing a short circuit and a reduction in lifespan that may occur when conductive impurities that may be generated during the assembly process of the secondary battery 100 are introduced into the cylindrical can 110 through the main layer 171 having a plurality of pores or penetrate into the pores of the main layer 171.

As described above, in the secondary battery according to various embodiments of the present disclosure, because a plurality of pores are formed in an upper insulating plate by an electrolyte, discharge of gas generated when an internal pressure rises can be easily achieved.

In addition, in the secondary battery according to various embodiments of the present disclosure, because an upper insulating plate includes a film-type auxiliary layer bonded to a main layer having a plurality of pores, a short circuit and a reduction in lifespan may be prevented that can occur when conductive impurities, which may be generated during a secondary battery assembly process, are introduced into the main layer having a plurality of pores or introduced into a cylindrical can.

The foregoing embodiments are only some embodiments for carrying out the secondary battery according to the present disclosure, which is not limited to the embodiment. It will be understood by a person skilled in the art that various changes in form and details may be made therein without departing from the scope of the present disclosure as defined by the following claims and their equivalents.

## Claims

1. A secondary battery comprising:
a cylindrical can;
an electrode assembly in the cylindrical can with an electrolyte, the electrode assembly comprising a cathode and an anode;
a cap assembly coupled to a top of the cylindrical can; and
a plate-shaped upper insulating plate between the electrode assembly and the cap assembly, the upper insulating plate comprising:
a main layer having a plurality of pores extending between an upper surface and a lower surface thereof; and
an auxiliary layer adhered to at least one surface of the main layer and partially melted by the electrolyte.

2. The secondary battery of claim 1, wherein the main layer is a mesh-type film having regular pores extending between the upper and lower surfaces.

3. The secondary battery of claim 2, wherein the main layer is any one selected from fiber glass, stainless steel, polyester, monofilament, or stainless black.

4. The secondary battery of claim 2 or claim 3, wherein the main layer has a mesh count in a range of 16x18 to 32x32 and a pore size of at least 700 µm.

5. The secondary battery of any one of claims 2 to 4, wherein the auxiliary layer is a film made of any one selected from nylon, polystyrene (PS), and oriented polystyrene (OPS).

6. The secondary battery of claim 1, wherein the main layer is any one of nonwoven fabric, nylon fabric, or PTFE film having irregular pores extending between the upper and lower surfaces.

7. The secondary battery of claim 6, wherein the auxiliary layer is a film made of any one selected from nylon, polystyrene (PS), and oriented polystyrene (OPS).

8. The secondary battery of any one of claims 1 to 7, wherein the auxiliary layer is bonded to at least one of the upper and lower surfaces of the main layer by an acrylic adhesive.

9. The secondary battery of any one of claims 1 to 8, wherein the electrolyte comprises LiPF₆ dissolved in a solvent having EC, EMC, DEC, PC, and DMC mixed in equal volume ratios.

10. The secondary battery of any one of claims 1 to 9, wherein the auxiliary layer has a thickness in a range of 5 µm to 25 µm.

11. The secondary battery of claim 1, wherein the main layer is polystyrene (PS) or oriented polystyrene (OPS) partially melted by the electrolyte.
